# EUROPEAN PATENT APPLICATION

(11) **EP 4 834 481 A1**
(43) Date of publication of application: **04.11.2026**
(21) Application number: 25172935.6
(22) Date of filing: 28.04.2025
(51) Int. Cl.: B04B 5/12, B04B 7/14, B01D 45/14, B04B 11/02

(54) **A CENTRIFUGAL SEPARATOR**

(71) Applicant: Alfa Laval Corporate AB, 221 00 Lund (SE)
(72) Inventor: HØY HANSEN, Nick, 9000 AALBORG (DK)
(74) Representative: Alfa Laval Attorneys

(57) **Abstract**

The present invention provides a centrifugal separator (1) for separating a gas liquid mixture into a gaseous phase and a liquid phase. The centrifugal separator (1) comprising a housing (2), a separation space (4) delimited at least in part by the housing (2), a separation arrangement (12, 13) inside the separation space (4) for separating the liquid phase from the gaseous phase, wherein the separation arrangement (12, 13) defining a vertical rotational axis (Y) and a horizontal radial axis (X) being perpendicular to the vertical rotational axis (Y), a drive arrangement configured for rotating the separation arrangement (12, 13) around the vertical rotational axis (Y), an inlet (14) for the gas liquid mixture, a gas outlet (5) for the separated gaseous phase, a liquid outlet (6) for the separated liquid phase, and wherein the separation arrangement comprises a plurality of discs (12) arranged in a disc stack and a filling material (13).

## Description

### Field of the Invention

The present invention relates to a centrifugal separator for separating a gas liquid mixture into a gaseous phase and a liquid phase and a method of separating a gas liquid mixture into a gaseous phase and a liquid phase.

### Background of the Invention

Centrifugal separators may be devised for separating a gas liquid mixture into a gaseous phase and a liquid phase. A liquid phase coming out of a centrifugal separator may include solid particles. One example of such gas liquid separation is the removal of oil and other particles from crankcase gas. Crankcase gas is ventilated from a crankcase of an internal combustion engine. A well-known type of centrifugal separator is used for disposing of crankcase gas. The crankcase gas is led into a rotor of the centrifugal separator and heavy constituents of the crankcase gas, such as oil and soot, are separated as a liquid phase from a cleaned gaseous phase. The liquid phase is led out of the centrifugal separator via a liquid outlet. The gaseous phase is lead out of the centrifugal separator via a gas outlet and could be connected to an air intake of the engine. Many countries have a strict legislation related to emission of crankcase gas from land-based vehicles. Gas liquid centrifugal separators are therefore a standard component of many kinds of internal combustion engines for land-based vehicles in order to limit emission of oil and other particles.

One constructional feature that is common among centrifugal separators configured for gas-liquid separation is that a rotor comprising separation aids e.g., in the form of separation discs, is arranged in a stationary housing. That is, the rotor rotates in a separation space that is stationary within the housing. The separation of gas and liquid may be in the form of concurrent separation i.e., the gas and the liquid are both moving in the same direction through the rotor while being separated. Alternatively, the separation of gas and liquid may be in the form of counter-current separation, i.e. the gas and the liquid move in opposite directions through the rotor while being separated.

Not only removal of oil and other particles causing health issues in crankcase gas are important nowadays. The gaseous phase of the gas liquid mixture having passed through the centrifugal separator should be disposed of in an environmentally friendly manner instead of being ventilated in untreated form to the atmosphere. So, focus today is also on reducing emissions in exhaust gas from internal combustion engines, such as increased efforts to reduce greenhouse gases, especially carbon dioxide, CO₂. This is especially relevant in the maritime industry, both from the industry as a whole and on individual vessels.

Scrubbing tower absorber is a well-known solution for removal of carbon dioxide. While being used today both in land-based applications and in marine applications, scrubber tower absorbers are large and bulky constructions, which is a drawback in marine applications where space always is limited. When using scrubbing tower absorbers an extra cleaning step is necessary for removing residual solvent after scrubbing. This adds further complexity to the process, which also leads to higher costs.

Another well-known solution of gas capture systems for reducing concentration of at least one gas in a mixture of gases is a so-called rotating packed bed, in which walls are horizontally orientated with packing material arranged there between. A solvent is lead through the packing material for reduced concentration of a gas in a gas mixture. In this system the flow of solvent typically is in counter-current flow with the flow of gas. Also, this technology is used in systems that are bulky and not practical for use in the marine industry.

There is thus a demand to have systems for removal of greenhouse gases from exhaust gases. Such systems should not be too complex yet efficiently constructed.

There is thus a need in the art for efficient reduction of carbon dioxide from exhaust gas of internal combustion engines, especially fit in confined spaces in the marine industry.

### Summary of the Invention

A main object of the present invention is to provide a compact centrifugal separator for use on-board vessels, that both functions efficiently and is cost-efficient.

As a first aspect of the invention, there is provided a centrifugal separator for separating a gas liquid mixture into a gaseous phase and a liquid phase. The centrifugal separator comprising a housing, a separation space delimited at least in part by the housing, a separation arrangement inside the separation space for separating the liquid phase from the gaseous phase, wherein the separation arrangement defining a vertical rotational axis and a horizontal radial axis being perpendicular to the vertical rotational axis, a drive arrangement configured for rotating the separation arrangement around the vertical rotational axis, an inlet for the gas liquid mixture, a gas outlet for the separated gaseous phase, a liquid outlet for the separated liquid phase, and wherein the separation arrangement comprises a plurality of discs arranged in a disc stack and a filling material.

The drive member may be a drive motor, such as an electric motor.

As used herein, the term "axially" denotes a direction which is parallel to a first rotational axis (Y). Accordingly, relative terms such as "above", "upper", "top", "below", "lower", and "bottom" refer to relative positions along the first rotational axis (Y). Correspondingly, the term "radially" denotes a direction extending radially from the first rotational axis (Y). A "radially inner position" thus refers to a position closer to the first rotational axis (Y) compared to "a radially outer position". A radial plane is a plane having its normal parallel to the first axis of rotation (Y). An axial plane is a plane having its normal perpendicular to the first axis of rotation (Y).

The separation space of the centrifuge bowl is where the gas liquid mixture is separated into at least one gas phase that is led out via at least one gas outlet and into at least one liquid phase that is led out via at least one liquid outlet.

The disc stack is a plurality of discs stacked on top of each other, creating a parallel configuration of centrifugation spaces. The disc stack increases the surface settling area such that the separation process is enhanced.

The filling material may also be referred to as a packing material that is suitable to handle the gas liquid mixture in the separation arrangement.

The first aspect of the invention is based on the insight that in certain applications, it is an advantage to be able to separate components contained in a gas liquid mixture during operation of a centrifugal separator, with the help of the filling material arranged in the separation arrangement.

The inventors have thus found that it is advantageous to be able to lead a gas liquid mixture comprising exhaust gases through a disc stack having a filling material in order to efficiently separate the gas liquid mixture into a gaseous phase and a liquid phase.

In embodiments of the first aspect, the inlet for the gas liquid mixture is connected to an inlet channel for receiving an exhaust gas incoming flow and a solvent channel for adding liquid solvent to the exhaust gas incoming flow. The solvent may be provided via a pipe or channel from a tank or other source containing the solvent resources. The solvent is often referred to being a lean solvent, that typically is defined as being a mixture of an organic diluent and an amine. The solvent may be a liquid containing a small amount of carbon dioxide or no carbon dioxide at all, so that it has a high capacity to absorb carbon dioxide. When the solvent contains a significant amount of carbon dioxide, it is referred to as being "rich", meaning that it is near saturation, when the solvent is not able to absorb any more carbon dioxide.

In embodiments of the first aspect, the solvent channel is connected to a nozzle for adding solvent in spray form to the exhaust gas incoming flow. The purpose of spraying solvent into the exhaust gas incoming flow is for the solvent to mix with the exhaust gas. The solvent may have the characteristics of a relatively low viscosity, i.e. a so-called thin liquid so that it conveniently can be turned into a spray containing very fine droplets. Thereby, the solvent is easy to mix with the exhaust gas to create a gas liquid mixture.

In embodiments of the first aspect, the nozzle is arranged upstream the separation arrangement. As used herein, "upstream" means "before" while "downstream" means "after", with respect to a flow of gas liquid mixture. Thus, the nozzle is arranged before the gas liquid mixture flow reaches the separation arrangement. The nozzle location may differ, it may be early in the inlet, i.e. high upstream so that exhaust gas and solvent have ample time to mix, or the location may be later in the inlet, i.e. closer to the separation arrangement for at more compact design.

In embodiments of the first aspect, the filling material is arranged between the discs such that the filling material fills the space between two consecutive discs from an inner circumference to an outer circumference. So, the filling material fills out the space between two neighbouring discs, from the vertical rotational axis to the perimeter of the discs.

As an example, the filling material may be porous. A porous filling material has a large amount of surface area, such that there is ample area to form a solvent film on the filling material. The packing or filling material could be made of metal, such as corrugated sheets, wire mesh, foam, cuttings, sponges, etc.

In embodiments of the first aspect, the discs of the disc stack are arranged in parallel and define an angle in relation to the horizontal radial axis. This angle is typically referred to as a tilt angle. So, the discs are conically shaped, whereby the inner circumference of each disc is located above the outer circumference of the same disc, such that the discs have a downward pointing direction. A certain angle of the disc stack helps the distribution of the solvent in the filling material. The droplet size distribution is optimized by the angle of the discs. The specific angle is also optimized in order to reduce pressure drop across the separator. The angle is typically in the range of 5° to 60°.

In embodiments of the first aspect, radially outer portions of the separation space are arranged in fluid communication with the gas outlet. When having passed through the separation arrangement, i.e. downstream the separation arrangement, the separated gaseous phase is led out through the gas outlet.

In embodiments of the first aspect, radially outer portions of the separation space are arranged in fluid communication with the liquid outlet. The separated liquid phase is thus lead out through the liquid outlet, after leaving the separation arrangement, i.e. downstream the separation arrangement.

In embodiments of the first aspect, the housing is arranged stationary in relation to the separation arrangement being driven by the drive arrangement around a rotor shaft. The rotor shaft has the same axis as the vertical rotational axis. So, both the discs and the filling material are rotating, when the centrifugal separator is in use.

As a second aspect of the invention, there is provided a method of separating a gas liquid mixture into a gaseous phase and a liquid phase. The method comprises the steps of providing a centrifugal separator, providing the gas liquid mixture to the inlet, leading the gas liquid mixture flow through the separation arrangement, separating the liquid phase and the gaseous phase by adhering the liquid phase to the filling material in the separation arrangement, venting out the separated gaseous phase through the gas outlet, and letting out the separated liquid phase through the liquid outlet.

This aspect may generally present the same or corresponding advantages as the former aspect. Effects and features of this second aspect are largely analogous to those described above in connection with the first aspect. Embodiments mentioned in relation to the first aspect are largely compatible with the second aspect.

The second aspect of the invention is based on the insight that in certain applications, it is an advantage to mix an exhaust gas stream with a solvent in order to pass that gas liquid mixture through a centrifugal separator. The centrifugal separator has a separation arrangement comprising discs and filling material, through which separation arrangement the gas liquid mixture is lead in order to efficiently separate the gas liquid mixture into a gaseous phase and a liquid phase. Thereby, the method handles separated gas and separated liquid in different outlets. The liquid outlet may be arranged at a lower location than the gas outlet, so that the solvent droplets arranged in a liquid flow (liquid phase) may travel down to the liquid outlet due to gravity. The gaseous outlet may be arranged at a higher location than the liquid outlet, so that the gas flow (gaseous phase) may travel up to the gas outlet due to gravity and that gases have a low density and being lighter than the liquid flow.

In embodiments of the second aspect, the step of providing the gas liquid mixture includes mixing an exhaust gas incoming flow and a liquid solvent resulting in the gas liquid mixture flow. Thereby the method may add solvent in spray form, in the shape of fine liquid droplets, to the exhaust gas flow. This achieves a good spreading of solvent in the gas flow.

In embodiments of the second aspect, the exhaust gas incoming flow includes carbon dioxide Thereby, it is advantageous to use a method that mixes a solvent with exhaust gases for separation in a centrifugal separator for reduction of carbon dioxide from the exhaust gases.

In embodiments of the second aspect, the step of mixing the exhaust gas incoming flow and the solvent comprises reacting solvent and carbon dioxide in the exhaust gas flow. Thus, the reaction is necessary for the carbon dioxide to be captured in the solvent. The method passes the gas liquid mixture through the filling material. Thereby solvent with the captured carbon dioxide may adhere to the filling material in the form of droplets. The inventors have thus found that it is advantageous to be able to provide a centrifugal separator having an improved carbon capturing function that can attract and remove carbon dioxide from exhaust gases, by mixing solvent into the incoming flow of exhaust gases.

Further features of, and advantages with, the invention will become apparent when studying the appended claims and the following description.

### Brief description of the Drawings

Figure 1 shows a schematic drawing of a centrifugal separator.
Figure 2 shows a flow chart of an embodiment of the method of operating a centrifugal separator.

### Detailed Description

Aspects and/or embodiments of the invention will now be described more fully. Like numbers refer to like elements throughout. Well-known functions or constructions will not necessarily be described in detail for brevity and/or clarity.

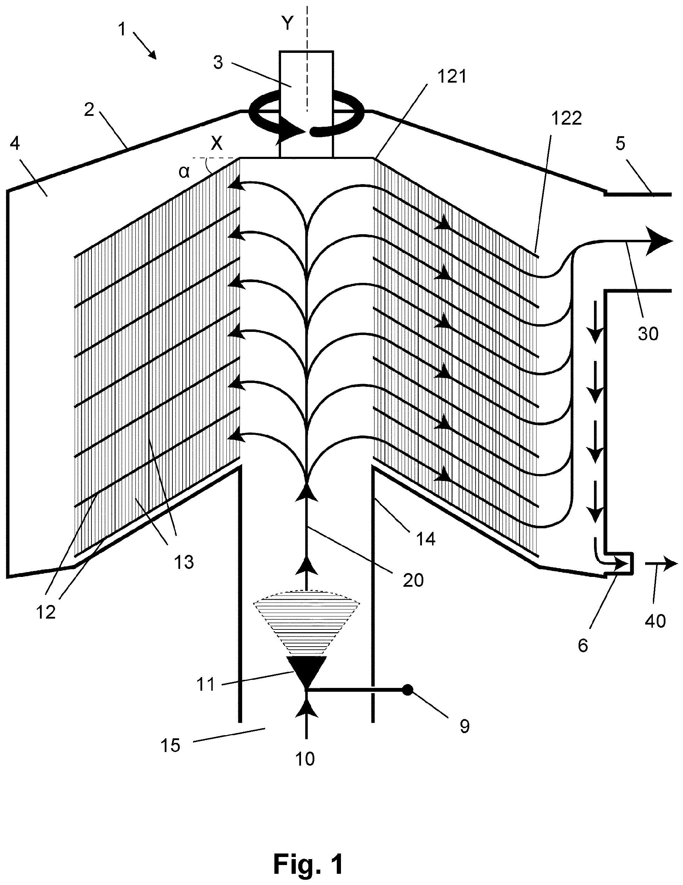

The centrifugal separator according to the present disclosure will be further illustrated by the following description with reference to the accompanying drawings. Fig.1 schematically shows a centrifugal separator of the present disclosure.

Fig. 1 shows a cross-section of an embodiment of a centrifugal separator 1 configured to separate a gaseous phase and a liquid phase from a gas liquid mixture. The gas liquid mixture may be an exhaust gas containing carbon dioxide (CO₂) and a solvent. The centrifugal separator 1 has a drive arrangement (not shown) configured for rotating a separation arrangement 12, 13 around a rotor shaft 3. The rotor shaft 3 has the same axis as a vertical rotational axis Y.

The drive arrangement comprises a drive unit that could be in the form of a drive motor, such as an electric motor. Alternatively, the drive arrangement could be a pneumatic motor, a hydraulic motor, a turbine wheel, a gear wheel, a pulley, a belt drive, etc.

The centrifugal separator 1 comprises a housing 2 that is stationary arranged in relation to the separation arrangement 12, 13. The housing 2 delimits therein a separation space 4. The housing may be formed of one or more parts.

The centrifugal separator 1 further comprises an inlet 14 for the gas liquid mixture, a gas outlet 5 for the separated gaseous phase and a liquid outlet 6 for the separated liquid phase. The gas outlet 5 and the liquid outlet 6 is in fluid communication with radially outer portions of the separation space 4. The gas outlet 5 is preferably arranged at the top of the housing and the liquid outlet 6 is preferably arranged at the bottom of the housing. To the inlet 14 is an inlet channel 15 connected.

The centrifugal separator 1 is provided with the separation arrangement 12, 13 comprising a filling material 13 and several discs 12 arranged in a disc stack. The discs 12 are arranged in parallel, wherein each disc has a certain deviation from the horizontal plane. This deviation is defined by angle α in relation to a horizontal radial axis X, which horizontal axis X is perpendicular to the vertical rotational axis Y. The filling material 13 is also referred to as a packing material, which fills up the space in between the discs in the disc stack. The filling material 13 is arranged between the discs from an inner circumference 121 to an outer circumference 122. The packing or filling material could be made of metal, such as corrugated sheets, wire mesh, wire coil, cuttings, etc.

The inner circumference 121 is located close to the rotor shaft and the outer circumference 122 of the disc stack is located toward the side wall of the housing 2. A certain amount of space is defined between the outer circumference 122 of the discs and the side wall of the housing 2, in which space the separated gaseous phase, and the separated liquid phase are led to the gas outlet 5 and the liquid outlet 6, respectively.

On board vessels the exhaust gas typically comes from an internal combustion engine. The exhaust gas is led via the inlet channel 15 to the inlet 14 of the centrifugal separator 1 as an exhaust gas incoming flow 10 that comprises carbon dioxide (CO₂). The inlet 14 of the centrifugal separator 1 is arranged upstream of the separation arrangement 12, 13.

To the exhaust gas incoming flow 10 a solvent is added by a solvent channel 9 connected to the inlet 14. The solvent is typically an aqueous amine, hydroxide or carbonate, i.e. a liquid having low viscosity. The solvent is provided to the solvent channel 9 from a tank or reservoir (not shown). The solvent channel 9 feeds solvent to a nozzle 11 that is arranged upstream of the separation arrangement 12, 13 where the exhaust gas incoming flow 10 passes by. After solvent has been added to the exhaust gas incoming flow 10 and the flow has passed by the nozzle 11 there is a gas liquid mixture flow 20 that reaches the separation arrangement 12, 13. Preferably, there is a good mixture of the solvent as a spray by the nozzle 11 into the exhaust gas flow, so that there is a uniform distribution of the fine droplets in the exhaust gas flow.

The separation of gas and liquid is in the form of concurrent separation i.e., the gaseous phase and the liquid phase are both moving in the same direction through the separation arrangement while being separated.

When using the centrifugal separator 1 for reduction of or removal of carbon dioxide from exhaust gas the principles will be explained in the following.

The exhaust gas incoming flow 10 travels through the inlet 14, upstream of the separation arrangement 12, 13. Before reaching the separation arrangement 12, 13 the solvent is sprayed, i.e. finely distributed by means of the nozzle 11, into the exhaust gas incoming flow 10. The mixture of exhaust gases and solvent is the gas liquid mixture flow 20 that travels into the separation arrangement 12, 13. In the gas liquid mixture flow 20 carbon dioxide (CO₂) reacts with the solvent, so that the solvent droplets capture carbon dioxide.

When the gas liquid mixture flow 20 leaves the inlet 14, downstream thereof, it travels through the filling material 13 between the discs 12. The filling material 13 captures the solvent containing carbon dioxide such that the solvent is distributed as a film on the filling material 13. The larger the surface area of the filling material 13 is the more efficient is the capture of solvent. When the gas liquid mixture flow 20 has travelled through the filling material 13, i.e. radially outwardly through the disc stack the gas and the liquid have been separated into the separated gaseous phase and the separated liquid phase. The exhaust gas outgoing flow is the separated gaseous phase 30 and the solvent outgoing flow is the separated liquid phase 40. The radially outer portions of the separation space 4 are arranged in fluid communication with the gas outlet 5 for the separated gaseous phase 30. And the radially outer portions of the separation space 4 are also arranged in fluid communication with the liquid outlet 6 for the separated liquid phase 40. Thereby, the separated gaseous phase 30 (the exhaust gas outgoing flow) is led out of the centrifugal separator 1 with reduced content of carbon dioxide or with only a very limited amount of carbon dioxide and the separated liquid phase 40 (the solvent outgoing flow) is led out of the centrifugal separator 1 containing carbon dioxide.

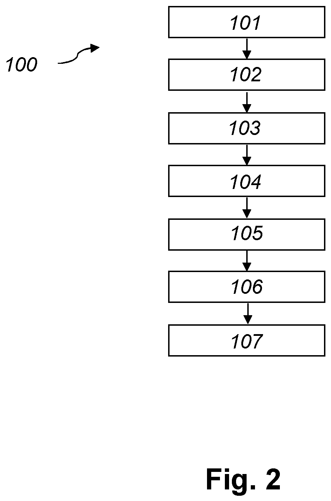

The method 100 of operating the centrifugal separator 1 according to the present invention is further illustrated by the flow chart presented in fig. 2.

As shown in fig. 2 the overall method 100 of operating the centrifugal separator 1 comprises the steps of providing 101 a centrifugal separator 1 as described in relation to fig. 1, providing 102 the gas liquid mixture to the inlet 14, leading 104 the gas liquid mixture flow 20 through the separation arrangement 12, 13, separating the liquid phase and the gaseous phase by adhering 105 the liquid phase to the filling material 13 in the separation arrangement, venting out 106 the separated gaseous phase 30 through the gas outlet 5, and letting out 107 the separated liquid phase 40 through the liquid outlet 6.

The gas liquid mixture flow 20 is led through the separation arrangement comprising a plurality of discs 12 arranged in a disc stack and the filling material 13, so that solvent is captured by and adhere to the filling material 13 in the separation arrangement. The liquid being captured on the filling material is collected and led out as the separated liquid phase 40 through the liquid outlet 6.

The step of providing 102 the gas liquid mixture includes mixing 103 an exhaust gas incoming flow 10 and a liquid solvent resulting in the gas liquid mixture flow 20. The exhaust gas incoming flow includes carbon dioxide. The step of mixing 103 the exhaust gas incoming flow 10 and the solvent comprises reacting solvent and carbon dioxide in the gas liquid mixture flow 20.

Solvent is provided from a channel 9 to the inlet 14. The solvent is sprayed by a nozzle 11 into the exhaust gas incoming flow 10, so that the solvent is finely and evenly distributed in the incoming gas flow. The mixing 103 of the exhaust gas incoming flow 10 and the solvent comprises reaction of solvent and carbon dioxide in the gas liquid mixture flow 20, so that the carbon dioxide contained in the exhaust gases by the reaction is transferred to and then contained in the solvent.

In the separation arrangement the gaseous phase is separated from the liquid phase, such that the gaseous phase comprises exhaust gas with less carbon dioxide and the liquid phase comprises solvent including carbon dioxide. The liquid phase is collected on the filling material, before it is let out via the liquid outlet 6.

The invention is not limited to the embodiment disclosed but may be varied and modified within the scope of the claims set out below. The invention is not limited to the type of separator as shown in the Figures. The term "centrifugal separator" also comprises centrifugal separators with a substantially horizontally oriented axis of rotation.

## Claims

1. A centrifugal separator (1) for separating a gas liquid mixture into a gaseous phase and a liquid phase, the centrifugal separator (1) comprising
a housing (2),
a separation space (4) delimited at least in part by the housing (2),
a separation arrangement (12, 13) inside the separation space (4) for separating the liquid phase from the gaseous phase, wherein the separation arrangement (12, 13) defining a vertical rotational axis (Y) and a horizontal radial axis (X) being perpendicular to the vertical rotational axis (Y),
a drive arrangement configured for rotating the separation arrangement (12, 13) around the vertical rotational axis (Y),
an inlet (14) for the gas liquid mixture,
a gas outlet (5) for the separated gaseous phase,
a liquid outlet (6) for the separated liquid phase, and
wherein the separation arrangement comprises a plurality of discs (12) arranged in a disc stack and a filling material (13).

2. The centrifugal separator (1) according to claim 1, wherein the inlet (14) for the gas liquid mixture is connected to an inlet channel (15) for receiving an exhaust gas incoming flow (10) and a solvent channel (9) for adding liquid solvent to the exhaust gas incoming flow (10), resulting in a gas liquid mixture flow (20).

3. The centrifugal separator (1) according to claim 1 or 2, wherein the solvent channel (9) is connected to a nozzle (11) for adding solvent in spray form to the exhaust gas incoming flow (10).

4. The centrifugal separator (1) according to any previous claim, wherein the nozzle (11) is arranged upstream the separation arrangement (12, 13).

5. The centrifugal separator (1) according to any previous claim, wherein the filling material (13) is arranged between the discs (12) such that the filling material (13) fills the space between two consecutive discs from an inner circumference (121) to an outer circumference (122).

6. The centrifugal separator (1) according to any previous claim, wherein the filling material (13) is porous.

7. The centrifugal separator (1) according to any previous claim, wherein the discs (12) of the disc stack are arranged in parallel and define an angle (α) in relation to the horizontal radial axis (X).

8. The centrifugal separator (1) according to any previous claim, wherein radially outer portions of the separation space (4) are arranged in fluid communication with the gas outlet (5).

9. The centrifugal separator (1) according to any previous claim, wherein radially outer portions of the separation space (4) are arranged in fluid communication with the liquid outlet (6).

10. The centrifugal separator (1) according to any previous claim, wherein the housing (2) is arranged stationary in relation to the separation arrangement (12, 13) being driven by the drive arrangement around a rotor shaft (3).

11. Method (100) of separating a gas liquid mixture into a gaseous phase and a liquid phase the method comprises the steps of:
- providing (101) a centrifugal separator (1) according to any of claims 1 to 10,
- providing (102) the gas liquid mixture to the inlet (14),
- leading (104) the gas liquid mixture flow (20) through the separation arrangement (12, 13),
- separating the liquid phase and the gaseous phase by adhering (105) the liquid phase to the filling material (13) in the separation arrangement,
- venting out (106) the separated gaseous phase (30) through the gas outlet (5), and
- letting out (107) the separated liquid phase (40) through the liquid outlet (6).

12. The method (100) according to claim 11, wherein the step of providing (102) the gas liquid mixture includes mixing (103) an exhaust gas incoming flow (10) and a liquid solvent resulting in the gas liquid mixture flow (20).

13. The method (100) according to claim 12, wherein the exhaust gas incoming flow includes carbon dioxide.

14. The method (100) according to claim 13, wherein the step of mixing (103) the exhaust gas incoming flow (10) and the solvent comprises reacting solvent and carbon dioxide in the gas liquid mixture flow (20).
